Europäisches Patentamt

European Patent Office

Office européen des brevets

(11) Numéro de publication : **0 520 906 A1**

# (12) DEMANDE DE BREVET EUROPEEN

(21) Numéro de dépôt : **92401813.8**

(22) Date de dépôt : **26.06.92**

(51) Int. Cl.⁵ : **B60R 25/10, G08B 29/10**

(30) Priorité : **27.06.91 FR 9107998**

(43) Date de publication de la demande :
**30.12.92 Bulletin 92/53**

(84) Etats contractants désignés :
**BE DE ES GB IT SE**

(71) Demandeur : **VALEO COMMUTATION**
**12-14, rue Jean Bart**
**F-78390 Voisins-Le-Bretonneux (FR)**

(72) Inventeur : **Peru, Patrick**
**26, Rue des Closeaux**
**F-77240 Vert St.Denis (FR)**

(74) Mandataire : **Gamonal, Didier**
**VALEO Management Services, Service**
**Propriété Industrielle 30, rue Blanqui**
**F-93406 Saint-Ouen Cédex (FR)**

(54) **Sirène à auto-alimentation et son procédé d'arrêt et de mise en veille pour dispositif d'alarme de véhicule automobile.**

(57) La sirène électronique (200) est propre à occuper un état de veille, un état d'arrêt ou un état d'alarme en étant reliée, d'une part, par une ligne de commande (204) à une centrale électronique d'alarme (100) et, d'autre part, par deux lignes d'alimentation électriques surveillées (201,202) à la batterie du véhicule. Cette sirène comporte un module acoustique (11) piloté par un module électronique comportant un module de gestion de la commande (5).

Le module électronique comporte un module d'arrêt/veille (3) connecté audit module de gestion de la commande (5) et adapté à recevoir, par l'intermédiaire de la ligne de commande (204) et dudit module de gestion (5), un message de mise en état d'arrêt ou de veille de ladite sirène (200).

Application véhicules automobiles

FIG.3

EP 0 520 906 A1

La présente invention concerne une sirène électronique à auto-alimentation pour dispositif d'alarme automobile et un procédé d'arrêt et de mise en veille d'une telle sirène, ladite sirène étant propre à occuper un état de veille, un état d'arrêt et un état d'alarme en étant reliée, d'une part, par une ligne de commande surveillée à une centrale électronique d'alarme à la disposition de l'usager et, d'autre part, par deux lignes d'alimentation électriques surveillées à la batterie du véhicule automobile.

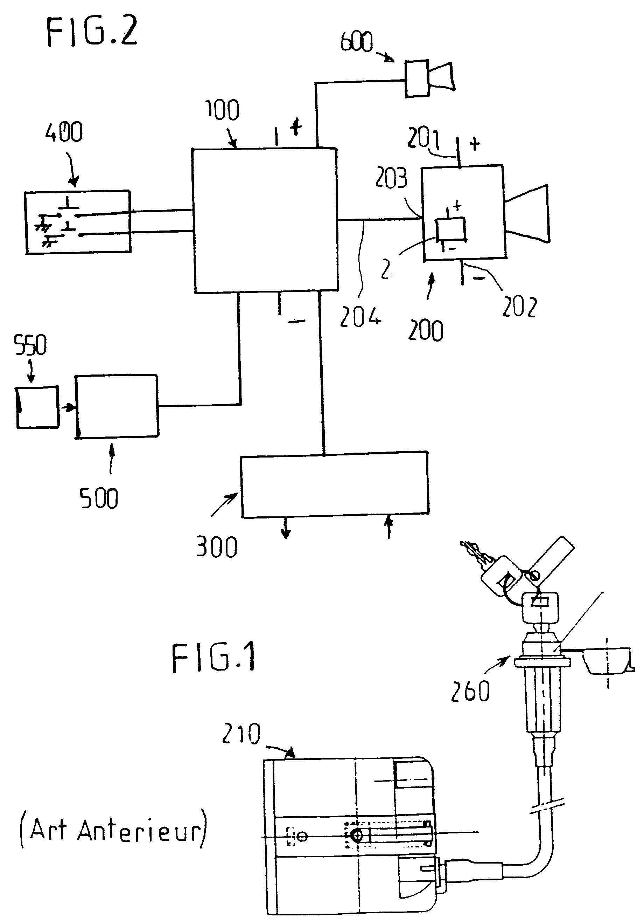

Usuellement (figure 1), la sirène électronique à auto-alimentation 210, dite aussi sirène auto-protégée, comporte un module électronique, un module acoustique piloté par le module électronique, un connecteur pour raccordement à la centrale d'alarme et un connecteur pour raccordement de ladite sirène à une serrure déportée 260.

Le module électronique comporte un module de gestion de la commande, un dispositif de surveillance qui met en route la sirène lorsque les lignes d'alimentation sont sabotées ou déconnectées de la batterie. Il en est de même lorsque la batterie est débranchée, par exemple pour une intervention dans le compartiment moteur.

En pratique cette serrure 260 est implantée sous le capot moteur du véhicule, en sorte qu'il faut ouvrir ledit capot pour accéder à ladite serrure et inhiber l'alarme à l'aide de la clé.

La serrure déportée a donc pour fonction de déconnecter une partie du circuit électronique de la ligne de l'alimentation et éviter que la sirène ne se mette en marche.

L'usager est donc obligé de laisser les clés à son garagiste, lorsque celui-ci fait une intervention par exemple sur le moteur du véhicule. En outre, une telle serrure est relativement coûteuse.

La présente invention a pour objet de pallier ces inconvénients et donc de créer un nouveau module électronique et un procédé permettant de mettre, de manière simple et économique, en état d'arrêt ou de veille la sirène auto-protégée.

Suivant l'invention une sirène du type sus-indiquée est caractérisée en ce que son module électronique comporte également un module d'arrêt/veille connecté au module de gestion de la commande et adapté à recevoir, par l'intermédiaire de la ligne de commande et dudit module de gestion, un message de mise en état d'arrêt ou de veille de ladite sirène.

Suivant une autre caractéristique un module d'accusé de réception est connecté au module d'arrêt/veille et est adapté, d'une part, à recevoir des messages provenant dudit module d'arrêt/veille et, d'autre part, à émettre vers la centrale d'alarme, à travers la ligne de commande, un signal électrique permettant à celle-ci de connaître l'état d'arrêt ou de veille de ladite sirène.

Suivant l'invention un procédé d'arrêt et de mise en veille d'une sirène à auto-alimentation du type sus-indiqué est caractérisé en ce que l'on émet à partir de la centrale de commande un message électrique d'arrêt ou de veille sur la ligne de commande, pour le transmettre dans le module d'arrêt/veille de la sirène et mettre dans un état de veille ou d'arrêt ladite sirène, et en ce que ladite sirène est adaptée à renvoyer à la centrale d'alarme, par l'intermédiaire de la ligne de commande, un signal électrique d'accusé de réception représentatif de l'état d'arrêt ou de veille du module d'arrêt/veille de ladite sirène.

Grâce à l'invention la présence d'une serrure déportée, avec son connecteur de liaison à la sirène, n'est plus obligatoire, et on peut inhiber ladite sirène aisément avant de faire toute intervention dans le compartiment moteur et ce en utilisant le fil de commande déjà existant. Bien entendu, la centrale de commande présente un générateur de messages électriques d'arrêt ou de veille ainsi qu'un récepteur de signal électrique d'accusé de réception.

Ainsi qu'on l'aura compris, le module de gestion de la commande permettant de détecter, d'une part, une coupure de la ligne de commande (ou son raccordement au + véhicule) et, d'autre part, une mise à la masse du véhicule de la ligne de commande ; le message d'arrêt ou de veille transmis par la ligne de commande sera émis sur une plage de tension intermédiaire, entre une plage de tension haute correspondant à une détection de coupure de la ligne de commande (ou son raccordement au plus véhicule) et une plage de tension basse correspondant à une mise à la masse de la ligne de commande, pour ne pas déclencher la sirène.

La description qui va suivre illustre l'invention en référence aux dessins annexés dans lesquels :

- la figure 1 est une vue schématique d'une sirène auto-protégée à serrure déportée de l'art antérieur ;
- la figure 2 est une vue schématique d'un dispositif d'alarme pour véhicule automobile incorporant la sirène auto-protégée selon l'invention ;
- la figure 3 est un synoptique de la sirène auto-protégée selon l'invention ;
- la figure 4 est une vue schématique du module de protection de ladite sirène ;
- la figure 5 est une vue schématique du module d'auto-alimentation de ladite sirène ;
- la figure 6 est une vue schématique du module de commande de ladite sirène ;
- la figure 7 est une vue schématique du module arrêt/veille de ladite sirène ;
- la figure 8 est une vue schématique du module accusé de réception de ladite sirène ;
- la figure 9 est une courbe caractéristique montrant le message d'envoi et d'accusé de réception selon l'invention pour la mise en état de veille de ladite sirène ;
- la figure 10 est une vue analogue à la figure 9 pour la mise en état d'arrêt de ladite sirène ;

- les figures 11 et 12 sont des courbes caractéristiques correspondants à une demande d'alarme pour respectivement l'état veille et l'état d'arrêt ;
- la figure 13 est une vue schématique du module de surveillance de ladite sirène ;
- la figure 14 est une vue schématique du module de réveil de ladite sirène ;
- la figure 15 est une vue schématique du module de comptage de ladite sirène ;
- la figure 16 est une vue schématique du module générateur de fréquences de ladite sirène ;
- la figure 17 est une vue schématique de l'état de puissance de ladite sirène.

Comme visible à la figure 2, le dispositif d'alarme pour véhicule automobile comporte une centrale électronique d'alarme et de commande 100 reliée, pour son alimentamtion électrique, aux bornes positive et négative de la batterie. A cette centrale 100 sont connectés, un dispositif de surveillance périphérique 400, pour détecter une ouverture des portes ou du capot du véhicule automobile, un dispositif de surveillance volumétrique 300, par exemple sous forme d'émetteur/récepteur à ultrasons, pour détecter une intrusion dans le véhicule, un dispositif de marche/arrêt 500, un avertisseur sonore 600 et une sirène électronique auto-protégée 200.

Le dispositif de marche/arrêt 500 peut être une serrure ou un récepteur à ultrasons pour coopération respectivement avec une clé mécanique 550 ou une clé électronique 550.

Dans tous les cas, lorsque l'usager sort ou entre dans le véhicule il peut mettre en veille ou arrêter le dispositif d'alarme de manière décrite ci-après. En état de veille, en cas de bris de glace, par exemple à l'aide d'une pierre, le dispositif de surveillance 300 enverra une information à la centrale 100 pour mise en alarme de la sirène. En cas d'ouverture des portes ou du capot moteur, le dispositif 400 comportant des contacts enverra une information à la centrale pour déclencher également la sirène. Cette sirène peut donc occuper un état de veille, d'arrêt, ou d'alarme.

La sirène 200, alimentée électriquement par la batterie du véhicule, comporte un module acoustique 11 piloté par un module électronique doté de trois modules commandant son fonctionnement, à savoir un module de gestion de la commande 5 venant de la centrale d'alarme 100, un module de surveillance 8 pour détection de coupures des lignes d'alimentation de la sirène, et un module d'arrêt/veille 3 pour, selon l'invention, mise en veille ou en arrêt de la sirène 200.

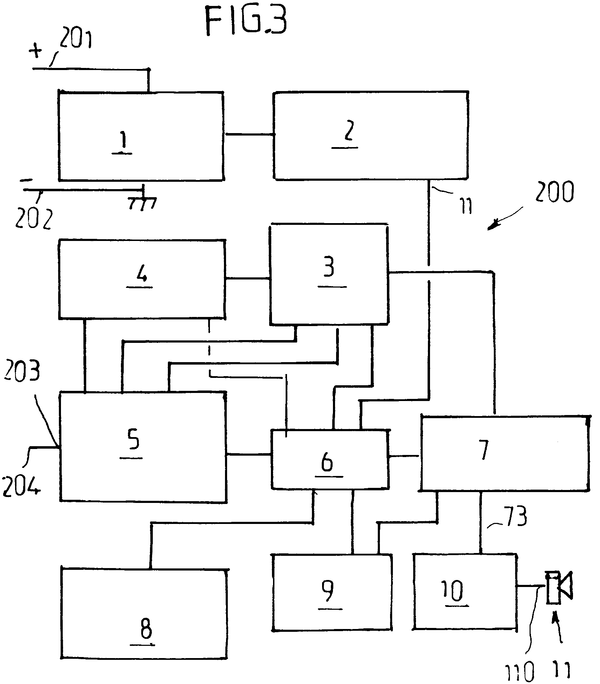

En se reportant à la figure 2 et au synoptique (figure 3 montrant les différentes liaisons entre les différents modules), on voit que cette sirène 200 présente également un module de protection aux parasites 1, un module d'auto-alimentation 2, le module d'arrêt/veille 3, un module d'accusé de réception 4, le module de commande 5, un module de réveil 6, un module générateur de fréquences 7, le module de surveillance 8, un module de comptage 9, un étage de puissance 10, et le module acoustique 11.

La sirène électronique 200 est reliée par une entrée de commande 203 à une ligne de commande 204 surveillée pour liaison électrique de la sirène 200 à la centrale 100. Cette sirène 200 est également reliée par deux lignes d'alimentation électriques surveillées 201,202 respectivement à la borne positive et négative de la batterie. Ici, les lignes 201,202,204 consistent ici en des fils électriques.

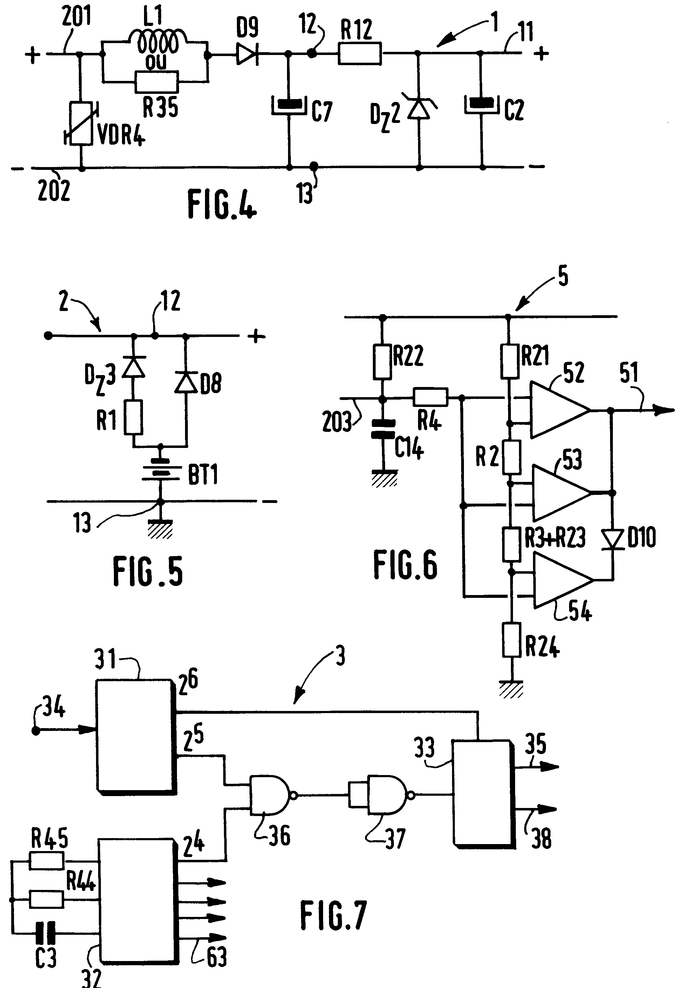

De manière connue en soi, son module de protection aux parasites (figure 4) présente, alimenté par la ligne positive 201, une self L1 et une résistance R35 montées en parallèles, une diode D9 et une résistance R12. Une varistance VDR1, une capacité C7, une diode Zener D22, et une capacité C1 sont montées entre les lignes 201,202 comme visibles à la figure 4. Ce module assure la protection de la sirène contre les surtensions parasites présentes sur le faisceau du véhicule, le réseau R12,D22 assurant une protection en tension. Ce module permet également d'alimenter les autres modules.

Par simplicité, les lignes positive et négative reliées respectivement aux lignes 201 et 202 seront dénommées ci-après "+véhicule" et "-véhicule".

Le module d'auto-alimentation 2 (figure 5) présente, monté entre les points 12 et 13 du module 1, une diode D23 et une résistance R1 montées en parallèles par rapport à une diode D8 en étant reliées à une batterie BT1. La charge de cette batterie, par exemple de type cadmium-nickel étanches à électrodes frittées, est assurée par la résistance R1 et le diode Zener D23, tandis que la diode D8 assure l'alimentation de la sirène en cas de fonctionnement autonome. Ce module 2 assure l'alimentation électrique de la sirène de manière autonome lors d'un sabotage d'au moins l'une des lignes d'alimentation 201,202.

Le module de commande 5 (figure 6) est relié à la ligne de commande 204 et comporte trois amplificateurs opérationnels 52,53,54 pour respectivement déclencher un cycle d'alarme lors de la coupure de la ligne de commande 204 ou son raccordement au "+ véhicule", déclencher un cycle d'alarme ou mettre en état de veille ou d'arrêt la sirène sur demande de la centrale 100, déclencher un cycle d'alarme lors du raccordement de la ligne de commande 204 au "-véhicule". Ce module 5 assure donc la surveillance de la ligne 204 et comporte une sortie 51 reliée aux modules 3 et 6. On notera qu'un ordre (signal électrique) de mise en état de veille ou d'arrêt de la sirène d'alarme provenant de la centrale 100 transite par l'amplificateur 53.

Bien entendu la mise à la masse de la ligne 204 correspond à une première plage de tension basse (comprenant ici la tension 0 V) déclenchant l'alarme, tandis que la coupure du fil 204 (ou sa mise au + véhicule) correspond à une deuxième plage de tension haute (comprenant ici la tension 12 V batterie) déclanchant l'alarme, en sorte que le message de mise en arrêt ou en veille de la sirène est émis dans une plage de tension intermédiaire entre les deux. Il en est de même du signal de mise en alarme de la sirène.

Le module arrêt/veille 3 (figure 7) assure la mise en veille ou l'arrêt de la sirène. L'envoi de signaux d'impulsions dans une plage de tension déterminée entraîne un réveil de la sirène. Ce module comporte trois circuits intégrés 31,32,33 et deux portes 36,37 NAND.

Le circuit 32 est un compteur oscillateur qui ouvre une fenêtre de comptage pendant laquelle le circuit 31, sous forme de compteur, compte les impulsions reçues sur le fil de commande 204. A la fin de cette fenêtre une impulsion d'horloge est envoyée au circuit 33, sous forme d'une bascule, qui mémorise l'état de la sortie $2^6$ du circuit 31. Cette sortie est à l'état 1 (veille) ou 0 (arrêt).

Le module 3 reçoit en 34 sur son circuit 31 une information provenant de la sortie 51 du module 5, tandis que son circuit 33 possède deux sorties 35,38 reliées au module d'accusé de réception 4 de manière décrite ci-après. Le circuit 32 reçoit une information provenant d'une ligne 63 reliée au module de réveil 6.

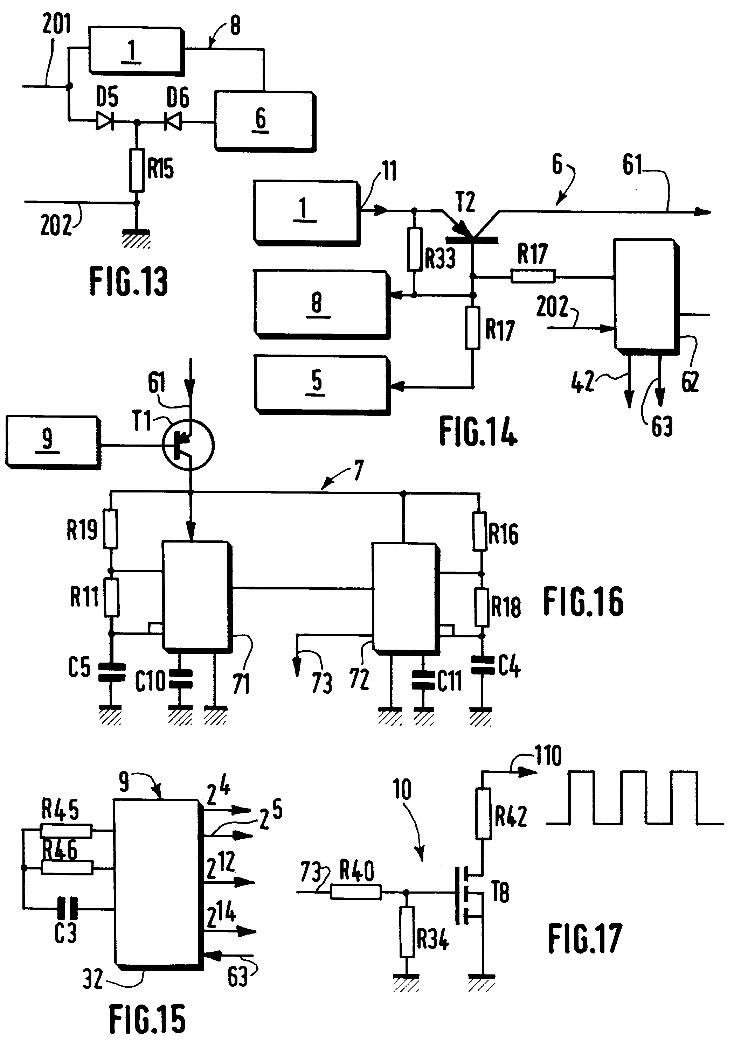

Le module de surveillance 8 (figure 13) comporte deux diodes D5,D6 montées en sens inverse et reliées par une résistance R15 à la masse et au fil 202 du véhicule. Ces diodes sont également reliées au "+ du véhicule" et au "-du véhicule" (fils 201,202), ainsi qu'au module de protection 1 et au module de réveil 6. Ce module déclenche un cycle d'alarme lors d'un sabotage d'au moins l'un des fils 201,202 ("+/- Véhicule"), grâce à la batterie BT1.

Le module de réveil 6 (figure 14) est relié au module de protection 1, au module de surveillance 8 et au module de commande 5 (à la sortie 51 de celui-ci). Il comporte un transistor T2 et des résistances R33,R17,R7, la résistance R7 reliant la base du transistor T2 à un circuit intégré 62 dont une sortie est reliée par la ligne 63 au circuit 32 du module arrêt/veille 3. Le circuit 62 a une sortie reliée au module 7 ainsi qu'une autre sortie reliée par une ligne 42 au module 4. Ce circuit 62 est également connecté à la ligne 202.

Le collecteur du transistor T2 sert d'alimentation aux différents modules grâce à une ligne 61, l'émetteur dudit transistor T2 étant relié au point 11 du module 1.

Le module de comptage 9 (figure 15) comporte les résistances R45,R46 et le condensateur C3 montés en parallèles pour formation d'un oscillateur ainsi que le circuit 32 du module 3. Les sorties $2^5,2^{12},2^{14}$ étant destinées respectivement à la cadence, ici 2,5Hz, au cycle (3 impulsions de marche - 3 impulsions d'arrêt) et au nombre de cycles. Ce module assure donc la gestion des temps d'émission du signal sonore. Il est relié au module 7 et notamment à la base d'un transistor T1 associé audit module 7.

Le module générateur de fréquences 7 (figure 16) est relié au module de comptage 9 ainsi qu'au module arrêt/veille 3 et comporte deux circuits intégrés 71,72 auxquelles sont associées respectivement, d'une part, des résistances R29,R11 des condensateurs C5,C10, et, d'autre part, des résistances R16,R18 et des condensateurs C4,C11. Les deux circuits 71,72 sont connectés au collecteur du transistor T1, dont l'émetteur est relié à la ligne 61, la base au module 9.

Le circuit 72 est relié par une ligne 73 à l'étage de puissance 10 (figure 17) qui amplifie la tension et le courant provenant du générateur de fréquences 7 pour attaquer un haut-parleur ou un transformateur appartenant au module acoustique. Cet étage de puissance comporte une résistance R40,R34,R42 ainsi qu'un transistor à effet de champ T8.

Le module acoustique 11 émet le signal sonore provenant de l'étage de puissance 7 et est composé, soit d'un haut-parleur, soit d'un résonateur piezoélectrique.

Ceci étant rappelé pour inhiber ladite sirène et empêcher notamment au module de surveillance de mettre en marche ladite sirène lorsque par exemple le garagiste débranche les fils de la batterie, suivant l'invention, un procédé d'arrêt et de mise en veille d'une sirène à auto-alimentation pour dispositif d'alarme automobile du type sus-indiqué est caractérisé en ce que l'on émet à partir de la centrale de commande 100 un message (ou signal) électrique d'arrêt ou de veille sur la ligne de commande 204, pour le transmettre dans le module d'arrêt/veille 3 et mettre dans un état de veille ou d'arrêt ladite sirène, et en ce que ladite sirène 200 renvoie à la centrale d'alarme 100, par l'intermédiaire de la ligne de commande, un signal électrique d'accusé de réception représentatif de l'état d'arrêt ou de veille du module d'arrêt/veille de ladite sirène 200.

Bien entendu, la centrale 100 est pourvue d'un émetteur de messages électriques d'arrêt ou de veille, ainsi que d'un récepteur du signal électrique d'accusé de réception.

Suivant une caractéristique importante de l'invention, une sirène auto-protégée du type sus-indiquée , est caractérisée en ce qu'elle comporte un module d'accusé de réception 4 adapté à émettre vers la centrale d'alarme 100 un signal électrique permettant à celle-ci de connaître l'état d'arrêt ou de veille de ladite sirène.

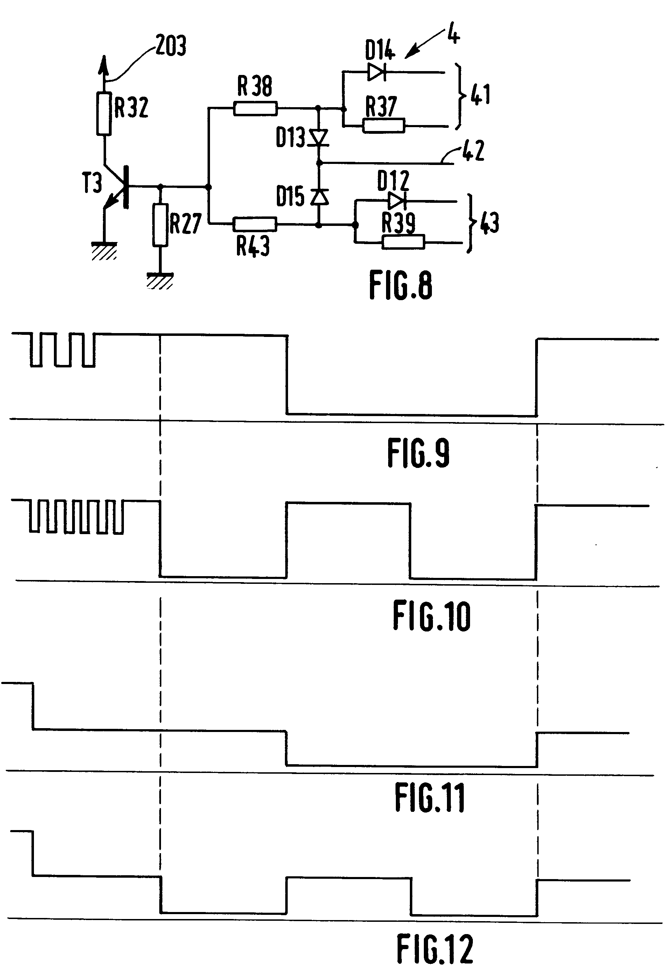

Plus précisément, en se reportant aux figures 9 et 10, dans lesquelles on a représenté en abcisse le temps et en ordonnée le voltage du message d'arrêt ou de mise en veille et du signal électrique d'accusé de réception, on voit que ledit message selon l'invention émis par la centrale 100 à la disposition de l'usager consiste en une suite d'impulsions ou de pulsations rectangulaires, le voltage étant compris dans la plage intermédiaire entre la première plage de voltage (mise à la masse de la ligne 204) et la seconde plage de voltage (coupure ou mise au plus de la ligne 204) décrites ci-dessus.

A titre d'exemple à la figure 9, lorsque l'usager sort de son véhicule et met en route la centrale par exemple à l'aide de sa clé électronique 550, celle-ci envoie pendant un temps de 100ms entre 64 et 96 impulsions à 2KHz puis s'arrête. Le module de commande 5 de la sirène 200 reçoit sur son comparateur 53 alors ce message, qui est transmis par la sortie 51 de ce module 5 au module d'arrêt/veille 3. Le module 3 envoie alors un message au module d'accusé de réception 4 qui renvoie l'information à la centrale de commande 100.

Comme visible à la figure 9, le signal renvoyé correspondant à un état haut (compris entre 0 et 12v) puis à un état bas.

On notera que la sortie 51 du module 5 est également reliée au module de réveil 6. Le module 3 occupe alors l'un des deux états arrêt ou veille et transmet un message au module d'accusé de réception 4.

Ce module 4 comporte un transistor T3 relié par une résistance R32 à l'entrée de commande 203 de la sirène, la base de ce transistor T3 étant reliée à deux résistances en parallèles R38,R34 reliées entre elles par des diodes D13,D15 montées en sens inverse.

Le point de liaison entre les diodes D13 et D15 reçoit un message de la ligne 42 (du circuit 62) correspondant à une inhibition du module 4. La résistance R38 est reliée à une résistance R37 et à une diode D14 montées en parallèles pour réception d'un message 41 correspondant à l'état de veille du module arrêt/veille 3, tandis que la résistance R43 est reliée à une diode D12 et à une résistance R39 montées en parallèles pour réception d'un message 43 correspondant à l'état d'arrêt du module 3.

Plus précisément la diode D14 est reliée à la sortie 38 du circuit 33 du module 3, ladite sortie 38 étant reliée également par une diode et une résistance (non visibles) à la ligne 61 et au transistor T1.

La diode D12 est reliée à l'autre sortie 35 du circuit 33, tandis que la résistance R37 est reliée aux modules 7 et 3, la résistance R38 quant à elle étant reliée à la porte NAND 36 ainsi qu'au circuit 32.

Ainsi toute cette disposition permet au module 4, suivant l'invention, d'envoyer un message d'accusé de réception à la centrale 100.

On appréciera suivant une caractéristique importante de l'invention, que tous messages électriques d'arrêt ou de veille provenant de la centrale 100 permettent une alimentation du réveil 6 pendant un délai déterminé. Ainsi par exemple tous messages des figures 9 et 10 permettent une alimentation du réveil 6 pendant un temps de 400ms, un signal d'inhibition étant transmis au bout de ce temps par la ligne 41 pour inhiber le module 4. Ainsi le module 4 ne peut renvoyer un accusé de réception que dans un temps inférieur à 400ms.

On notera que lorsque le conducteur remonte dans son véhicule, il envoie par l'intermédiaire de la centrale 100 et de la ligne 204 un signal au module de commande 5, lequel actionne le module 3, qui envoie un message au module 4, lequel renvoie un message d'accusé de réception à la centrale 103, ledit message correspondant à une valeur basse de tension suivie d'une montée de tension et d'une descente de tension.

On notera en se reportant aux figures 9 et 10 que les impulsions ont même amplitude, mais que le nombre d'impulsions à l'état arrêt plus élevé, par exemple, pour un temps 100ms, on envoie un nombre de pulsations entre 97 et 128 à 2KHz.

A la figure 9 le signal d'accusé de réception est à l'état haut pendant 100ms et à l'état bas pendant 200ms, tandis qu'à la figure 10 le signal d'accusé de réception est à l'état bas pendant 100ms puis à l'état haut pendant 100ms et enfin à l'état bas pendant 100ms. Ainsi le message d'accusé de réception suivant une caractéristique de l'invention est différent selon que la sirène est à l'état arrêt ou veille. La centrale peut ainsi repérer dans quel état se trouve ladite sirène, le nombre d'impulsions du signal qu'elle émet variant selon l'état désiré arrêt ou veille de la sirène.

En cas de demande d'alarme (figures 11 et 12), lorsque la sirène se trouve dans l'état veille (figure 11) la centrale envoie un signal continu avec une tension abaissée pendant 100ms, et le module 4 renvoie un signal d'accusé de réception pendant 300ms avec un état haut pendant 100ms et un état bas pendant 200ms. Lorsque la sirène est dans l'état arrêt (figure 12), la centrale envoie un signal continu avec une tension abaissée pendant également un temps de 100ms, l'état du signal de renvoi de l'accusé de réception de la sirène est en bas pendant 100ms puis haut pendant 100ms et enfin bas pendant 100ms.

On notera suivant une caractéristique importante de l'invention, que lorsque la centrale reçoit par exemple dans le cas de la figure 9 un signal d'accusé de réception différent du signal théorique, par exemple en cas de panne de la sirène, ladite centrale renvoie un nouveau message de mise en veille de la sirène et lorsque le message d'accusé de réception ne correspond pas une seconde fois au signal théorique, ladite centrale prend en compte cette information pour ultérieurement déclencher l'avertisseur sonore 600 en cas d'effraction. Bien entendu ladite centrale est équipée d'un circuit en conséquence, en étant par exemple programmée pour ce faire.

Il en est de même dans toutes les autres configurations, par exemple lorsque la centrale envoie un signal d'alarme, ladite commande réémet un deuxième signal si nécessaire dans le cas où l'accusé de réception ne correspond pas au signal théorique. Ainsi qu'on le sait et compte tenu des législations, généralement le signal d'alarme correspond à l'émission de trois impulsions de 25s séparées les unes des autres par un temps de 25s, la législation française exigeant que l'alarme se déclenche pendant 30s au maximum puis s'arrête pendant 30s.

Bien entendu cela dépend des législations des divers pays, c'est la raison pour laquelle la sirène selon l'invention est fabriquée à l'aide de diodes résistantes et autres composants pour s'adapter aux divers desiderata des législations.

Bien entendu la présente invention n'est pas limitée à l'exemple de réalisation décrit mais englobe toutes variantes de réalisation. En particulier, la sirène peut être fabriquée à l'aide d'un circuit intégré unique.

## Revendications

1) Sirène électronique à auto-alimentation (200) pour dispositif d'alarme automobile, ladite sirène (200) étant propre à occuper un état de veille, un état d'arrêt ou un état d'alarme en étant reliée, d'une part, par une ligne de commande (204) à une centrale électronique d'alarme (100) à la disposition de l'usager et, d'autre part, par deux lignes d'alimentation électriques surveillées (201,202) à la batterie du véhicule automobile, dans laquelle un module acoustique (11) est piloté par un module électronique comportant un module de gestion de la commande (5) venant de la centrale d'alarme (100) et relié à ladite ligne de commande, caractérisé en ce que son module électronique comporte également un module d'arrêt/veille (3) connecté audit module de gestion de la commande (5) et adapté à recevoir, par l'intermédiaire de la ligne de commande (204) et dudit module de gestion (5), un message de mise en état d'arrêt ou de veille de ladite sirène (200).

2) Sirène selon la revendication 1, caractérisé en ce que le module arrêt/veille (3) comporte trois circuits intégrés (31,32,33) et deux portes NAND (36,37), l'un desdits circuits, dit premier circuit, étant un compteur (31), l'autre, dit second circuit, étant un compteur oscillateur (32) et le troisième un circuit comportant une bascule qui mémorise l'état de la sortie dudit premier circuit (31).

3) Sirène selon la revendication 2, caractérisé en ce que le second circuit (32) est adapté à ouvrir une fenêtre de comptage pendant laquelle le premier circuit (31) compte les impulsions reçues sur le fil de commande.

4) Sirène selon l'une quelconque des revendications 1 à 3, caractérisé en ce qu'un module d'accusé de réception (4) est connecté audit module d'arrêt/veille (3) et est adapté, d'une part, à recevoir des messages provenant dudit module d'arrêt/veille et, d'autre part, à émettre vers la centrale d'alarme (100), à travers la ligne de commande (204), un signal électrique permettant à celle-ci de connaître l'état d'arrêt ou de veille de ladite sirène (200).

5) Sirène selon la revendication 4, dans laquelle un module de réveil (6) est relié à un module de commande (5), caractérisée en ce que le module d'accusé de réception (4) est relié au module de réveil (6) pour recevoir de celui-ci un message d'inhibition.

6) Procédé d'arrêt et de mise en veille d'une sirène électronique à auto-alimentation (200) selon l'une quelconques des revendications 1 à 5, caractérisé en ce que l'on émet à partir de la centrale de commande (100) un message électrique d'arrêt ou de veille sur la ligne de commande (204), pour le transmettre dans le module d'arrêt/veille (3) de la sirène (200) et mettre dans un état de veille ou d'arrêt ladite sirène (200), et en ce que ladite sirène est adaptée à renvoyer à la centrale d'alarme, par l'intermédiaire de la ligne de commande (204), un signal d'accusé de réception représentatif de l"état d'arrêt/veille de ladite sirène.

7) Procédé selon la revendication 6, caractérisé en ce que le message électrique d'arrêt ou de veille est constitué par un nombre d'impulsions variable suivant l'état désiré de veille ou d'arrêt de ladite sirène (200).

8) Procédé selon la revendication 6 ou 7, caractérisé en ce que le signal d'accusé de réception correspondant à l'état de veille de ladite sirène (200) est différent du signal d'accusé de réception correspondant à l'état d'arrêt de ladite sirène (200).

9) Procédé selon l'une quelconque des revendications 6 à 8, caractérisé en ce que lorsque ladite centrale (103) reçoit un signal d'accusé de réception défectueux différent du signal d'accusé de réception théorique, ladite sirène (200) renvoie de nouveau un message correspondant à l'état d'arrêt ou de veille désiré.

# FIG.2

# FIG.1

(Art Anterieur)

# FIG.3

FIG.4

FIG.5

FIG.6

FIG.7

FIG.8

FIG.9

FIG.10

FIG.11

FIG.12

**FIG.13**

**FIG.14**

**FIG.16**

**FIG.15**

**FIG.17**

Office européen
des brevets

## RAPPORT DE RECHERCHE EUROPEENNE

Numero de la demande

EP 92 40 1813

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2 193 939 (MACE) <br> * abrégé; figures 1,3,5 * <br> * page 2, ligne 80 - ligne 115 * <br> --- | 1,6 | B60R25/10 <br> G08B29/10 |
| A | US-A-4 885 572 (KEISUKE IWATA ET AL.) <br> * abrégé; figure 1 * <br> --- | 1,6 | |
| A | PATENT ABSTRACTS OF JAPAN <br> vol. 10, no. 129 (E-403)(2186) 14 Mai 1986 <br> & JP-A-60 260 238 ( NISSAN JIDOSHA K.K. ) 23 Décembre 1985 <br> * abrégé * <br><br> ----- | 1,6 | |

**DOMAINES TECHNIQUES RECHERCHES (Int. Cl.5 )**

B60R
G08B

Le présent rapport a été établi pour toutes les revendications

| Lieu de la recherche | Date d'achèvement de la recherche | Examinateur |
|---|---|---|
| BERLIN | 26 AOUT 1992 | DANIELIDIS S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)